(19) Europäisches Patentamt
European Patent Office
Office européen des brevets

(11) **EP 4 404 548 A1**

(12) **EUROPEAN PATENT APPLICATION**

(43) Date of publication:
24.07.2024 Bulletin 2024/30

(21) Application number: 23220679.7

(22) Date of filing: **29.12.2023**

(51) International Patent Classification (IPC):
*H04M 9/08* (2006.01)    *G10L 19/012* (2013.01)
*G10L 19/008* (2013.01)

(52) Cooperative Patent Classification (CPC):
**H04M 9/082; G10L 19/012;** G10L 19/008

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.01.2023 GB 202300735**

(71) Applicant: **Nokia Technologies Oy
02610 Espoo (FI)**

(72) Inventors:
• **MÄKINEN, Jorma Juhani**
Tampere (FI)
• **TAMMI, Mikko Tapio**
Tampere (FI)
• **VILERMO, Miikka Tapani**
Siuro (FI)

(74) Representative: **Nokia EPO representatives
Nokia Technologies Oy
Karakaari 7
02610 Espoo (FI)**

(54) **ACOUSTIC ECHO CANCELLATION**

(57)    A method for generating at least two channel audio signals for two or multi-way communication, the method comprising: capturing, from at least two microphones, at least two audio signals; generating at least two audio signals based on the captured at least two audio signals; analysing an ambient part of the at least two audio signals to determine a difference parameter; and generating a spatial comfort noise based on the difference parameter.

Figure 1

## Description

Field

The present application relates to apparatus and methods for determining acoustic echo cancellation.

Background

3GPP IVAS is expected to bring an object and ambience audio representation to mobile communications. Object audio signals are typically able to represent both a user's speech component and any ambience component within an audio scene around the capture device. This is significantly different from the previous generation devices and standards where the aim has been to attenuate any ambience component and focus only on the speech component.

Furthermore, IVAS brings with it for the first time spatial audio with two or more channels into a telecommunications audio standard.

Echo, for the purpose for this disclosure, is where downlink sound in two way audio communications travel from speaker(s) to microphones via an acoustic path. Furthermore, in situations where the speakers and microphones are in the same device, aerial and also mechanical sound paths can carry sound from the speaker(s) to microphones.

Echo cancellation is audio processing in a two way audio communications where downlink audio is removed from the uplink audio so that the user at the other end does not hear themselves with a delay. Hearing one's own voice with a delay can be annoying and make talking almost impossible. Additionally, when echos are repeated over several transmissions back and forth the effect can become unbearably loud and noisy and create 'feedback' rendering the call unbearable.

Spatial echo cancellation based on the application of echo cancellation to spatial audio is a current research topic.

Summary

There is provided according to a first aspect a method for generating at least two channel audio signals for two or multi-way communication, the method comprising: capturing, from at least two microphones, at least two audio signals; generating at least two audio signals based on the captured at least two audio signals; analysing an ambient part of the at least two audio signals to determine a difference parameter; and generating a spatial comfort noise based on the difference parameter.

Generating at least two audio signals based on the captured at least two audio signals may further comprise: obtaining at least two downlink audio signals; determining at least two estimated echo audio signals from the at least two downlink audio signals; and subtracting the at least two estimated echo audio signals from the captured at least two audio signals to generate the at least two audio signals.

The method may further comprise estimating an ambient part noise level, wherein generating a spatial comfort noise based on the difference parameter may further comprise generating a spatial comfort noise further based on the ambient part noise level.

The difference parameter may be a directional parameter representing a direction of the ambient part of the at least two audio signals, and spatially analysing the ambient part of the at least two audio signals to determine the difference parameter may further comprise: determining a delay and/or phase and/or level difference between at least a first pair of the at least two audio signals; and determining a directional parameter based on the delay and/or phase and/or level difference and a determined distance and/or orientation between microphones associated with the first pair of the at least two audio signals.

Spatially analysing the ambient part of the at least two audio signals to determine the difference parameter may further comprise: determining a diffuseness of the at least two audio signals; and determining the difference parameter based on the determined diffuseness.

Spatially analysing an ambient part of the at least two audio signals to determine a difference parameter may comprise: determining for at least one time and/or frequency element that the at least two audio signals comprise an active non-stationary audio source; and spatially analysing the ambient part of the at least two audio signals for elements other than the determined at least one time and/or frequency element in order to determine an ambient directional parameter as the directional parameter.

The difference parameter may be one of: a directional parameter representing a direction of the ambient part of the at least two audio signals; a phase difference parameter representing a phase difference between the ambient part of the at least two audio signals; a level difference parameter representing a level difference between the ambient part of the at least two audio signals; and a delay or time difference parameter representing a delay or time difference between the ambient part of the at least two audio signals.

According to a second aspect there is provided an apparatus for generating at least two channel audio signals for two or multi-way communication, the apparatus comprising means configured to: capture, from at least two microphones, at least two audio signals; generate at least two audio signals based on the captured at least two audio signals; analyse an ambient part of the at least two audio signals to determine a difference parameter; and generate a spatial comfort noise based on the difference parameter.

The means configured to generate at least two audio signals based on the captured at least two audio signals may be further configured to: obtain at least two downlink audio signals; determine at least two estimated echo audio signals from the at least two downlink audio signals; and subtract the at least two estimated echo audio signals from the captured at least two audio signals to generate the at least two audio signals.

The means may be further configured to estimate an ambient part noise level, wherein the means configured to generate a spatial comfort noise based on the difference parameter may be further configured to generate a spatial comfort noise further based on the ambient part noise level.

The difference parameter may be a directional parameter representing a direction of the ambient part of the at least two audio signals, and the means configured to spatially analyse the ambient part of the at least two audio signals to determine the difference parameter may be further configured to: determine a delay and/or phase and/or level difference between at least a first pair of the at least two audio signals; and determine a directional parameter based on the delay and/or phase and/or level difference and a determined distance and/or orientation between microphones associated with the first pair of the at least two audio signals.

The means configured to spatially analyse the ambient part of the at least two audio signals to determine the difference parameter may be further configured to: determine a diffuseness of the at least two audio signals; and determine the difference parameter based on the determined diffuseness.

The means configured to spatially analyse an ambient part of the at least two audio signals to determine a difference parameter may be configured to: determine for at least one time and/or frequency element that the at least two audio signals comprise an active non-stationary audio source; and spatially analyse the ambient part of the at least two audio signals for elements other than the determined at least one time and/or frequency element in order to determine an ambient directional parameter as the directional parameter.

The difference parameter may be one of: a directional parameter representing a direction of the ambient part of the at least two audio signals; a phase difference parameter representing a phase difference between the ambient part of the at least two audio signals; a level difference parameter representing a level difference between the ambient part of the at least two audio signals; and a delay or time difference parameter representing a delay or time difference between the ambient part of the at least two audio signals.

According to a third aspect there is provided an apparatus for generating at least two channel audio signals for two or multi-way communication, the apparatus comprising at least one processor and at least one memory storing instructions that, when executed by the at least one processor, cause the system at least to perform: capturing, from at least two microphones, at least two audio signals; generating at least two audio signals based on the captured at least two audio signals; analysing an ambient part of the at least two audio signals to determine a difference parameter; and generating a spatial comfort noise based on the difference parameter.

The apparatus caused to perform generating at least two audio signals based on the captured at least two audio signals may further be caused to perform: obtaining at least two downlink audio signals; determining at least two estimated echo audio signals from the at least two downlink audio signals; and subtracting the at least two estimated echo audio signals from the captured at least two audio signals to generate the at least two audio signals.

The apparatus may be further caused to perform estimating an ambient part noise level, wherein the apparatus caused to perform generating a spatial comfort noise based on the difference parameter may further be caused to perform generating a spatial comfort noise further based on the ambient part noise level.

The difference parameter may be a directional parameter representing a direction of the ambient part of the at least two audio signals, and the apparatus caused to perform spatially analysing the ambient part of the at least two audio signals to determine the difference parameter may further be caused to perform: determining a delay and/or phase and/or level difference between at least a first pair of the at least two audio signals; and determining a directional parameter based on the delay and/or phase and/or level difference and a determined distance and/or orientation between microphones associated with the first pair of the at least two audio signals.

The apparatus caused to perform spatially analysing the ambient part of the at least two audio signals to determine the difference parameter may further be caused to perform: determining a diffuseness of the at least two audio signals; and determining the difference parameter based on the determined diffuseness.

The apparatus caused to perform spatially analysing an ambient part of the at least two audio signals to determine a difference parameter may be caused to perform: determining for at least one time and/or frequency element that the at least two audio signals comprise an active non-stationary audio source; and spatially analysing the ambient part of the at least two audio signals for elements other than the determined at least one time and/or frequency element in order to determine an ambient directional parameter as the directional parameter.

The difference parameter may be one of: a directional parameter representing a direction of the ambient part of the at least two audio signals; a phase difference parameter representing a phase difference between the ambient part of the at least two audio signals; a level difference parameter representing a level difference between the ambient part of the at least two audio signals; and a delay or time difference parameter representing a delay or time difference between the ambient part of the at least two audio signals.

According to a fourth aspect there is provided an apparatus for generating at least two channel audio signals for two or multi-way communication, the apparatus comprising: capturing circuitry configured to capture, from at least two microphones, at least two audio signals; generating circuitry configured to generate at least two audio signals based on the captured at least two audio signals; analysing circuitry configured to analyse an ambient part of the at least two audio signals to determine a difference parameter; and generating circuitry configured to generate a spatial comfort noise based on the difference parameter

According to a fifth aspect there is provided a computer program comprising instructions [or a computer readable medium comprising instructions] for causing an apparatus, for generating at least two channel audio signals for two or multi-way communication, the apparatus caused to perform at least the following: capturing, from at least two microphones, at least two audio signals; generating at least two audio signals based on the captured at least two audio signals; analysing an ambient part of the at least two audio signals to determine a difference parameter; and generating a spatial comfort noise based on the difference parameter.

According to a sixth aspect there is provided a non-transitory computer readable medium comprising program instructions for causing an apparatus, for generating at least two channel audio signals for two or multi-way communication, to perform at least the following: capturing, from at least two microphones, at least two audio signals; generating at least two audio signals based on the captured at least two audio signals; analysing an ambient part of the at least two audio signals to determine a difference parameter; and generating a spatial comfort noise based on the difference parameter.

According to a seventh aspect there is provided an apparatus, for generating at least two channel audio signals for two or multi-way communication, comprising: means for capturing, from at least two microphones, at least two audio signals; means for generating at least two audio signals based on the captured at least two audio signals; means for analysing an ambient part of the at least two audio signals to determine a difference parameter; and means for generating a spatial comfort noise based on the difference parameter.

According to an eighth aspect there is provided a computer readable medium comprising instructions for causing an apparatus, for generating at least two channel audio signals for two or multi-way communication, to perform at least the following: capturing, from at least two microphones, at least two audio signals; generating at least two audio signals based on the captured at least two audio signals; analysing an ambient part of the at least two audio signals to determine a difference parameter; and generating a spatial comfort noise based on the difference parameter.

An apparatus comprising means for performing the actions of the method as described above.

An apparatus configured to perform the actions of the method as described above.

A computer program comprising program instructions for causing a computer to perform the method as described above.

A computer program product stored on a medium may cause an apparatus to perform the method as described herein.

An electronic device may comprise apparatus as described herein.

A chipset may comprise apparatus as described herein.

Embodiments of the present application aim to address problems associated with the state of the art.

Summary of the Figures

For a better understanding of the present application, reference will now be made by way of example to the accompanying drawings in which:

Figure 1 shows an example two-way communication system suitable for employing apparatus according to some embodiments;
Figure 2 shows a schematic view of an apparatus according to some embodiments;
Figure 3 shows a schematic view of an apparatus in further detail according to some embodiments;
Figure 4 shows a flow diagram of an example apparatus as shown in Figure 3 according to some embodiments;
Figure 5 shows a flow diagram of an example apparatus and the spatial analyser as shown in Figure 3 according to some embodiments;
Figure 6 shows a flow diagram of an example apparatus and the spatial comfort noise generator as shown in Figure 3 according to some embodiments;
Figure 7 shows a graph showing both channels of an example two stereo comfort noise levels;
Figure 8 shows graphs of synthesized binaural signals for two test cases; and
Figure 9 shows a graph of frequency domain representations of the later part of the example shown in Figure 8.

Embodiments of the Application

As discussed above one of the challenges that are being researched is one of spatial echo cancellation.

Spatial auditory masking is a psychoacoustic audio phenomenon, where a first sound source in a direction masks (makes more difficult or impossible to hear) a second sound source in approximately the same direction.

Furthermore, echo cancellers estimate echo contributions and subtract the estimated echo from an uplink signal. Time variance (for example speaker location movement with respect to a microphone location or acoustic space changes), or nonlinear echo path situations (non-ideal transducer components), or a complex acoustic space with lots of echo paths typically reduce the accuracy of the echo estimate. Therefore, the resulting signal contains both the spatial ambience component from the near end, user sounds (typically talk) at the near end, and the residual echo component. The residual echo component can be further reduced using suppression. The suppression of the residual echo component creates gaps in the audio. These generated gaps are seldom a problem for local user talking sounds because talking is non-stationary by nature and a local user seldom talks at the same time as the far end user. The gaps however can be a problem for stationary ambient sound. Suppression artefacts can be masked using comfort noise. In other words, generated noise can be used to 'patch' the gaps in noise and white noise or other suitable comfort noise can be used to 'patch' gaps in the ambient noise.

In spatial audio communications any comfort noise is also spatial, as without spatially matched comfort noise any suppressed sections remain noticeable.

To obtain spatial parameters, such as directions to enable the noise to be placed in the 'correct' position to patch a gap, the microphone audio signals are analysed. For example, level (difference) based analysis can be employed to determine directions and these spatial parameters used in order to implement spatial comfort noise insertion. However typical mobile phone sized devices employ microphone distances which are so small that at low frequencies there is hardly any level difference between the microphone signals.

Thus, level difference based parameter determination and spatial comfort noise has almost no perceivable direction at low frequencies. This results in the comfort noise appearing from a 'centre' direction even when the ambient background noise is left or right and making the comfort noise distinguishable and annoying.

Furthermore, in order to make as good as possible the match between the ambience and comfort noise, the spatial characteristics of the comfort noise, in a particular direction, also need to have a good match with the spatial characteristics of the ambience. Estimating the direction of the ambience is difficult because the local talker and the downlink signal are typically loud and dominate when compared to the ambience. Therefore, direction estimation for the ambience related noise is difficult to implement. The concept as discussed herein in further detail by the following embodiments attempts to achieve a better perceived comfort noise direction match rather than following the local talker or downlink sound direction. This can in some embodiments enable the comfort noise to better blend with the ambient noise and thus make the comfort noise less distinguishable and annoying.

In the following embodiments the examples are shown as an electronic device or apparatus with at least two microphones, at least one loudspeaker and an antenna. Furthermore, the apparatus or device is used for two-way (or more generically multi-way) communication and where the apparatus or device is configured to cancel echo sounds and masks suppression artefacts using comfort noise that mimics the spatial direction of the ambient noise using a delay/phase/level difference between two channels of the comfort noise and/or using information about the diffuseness of the microphone signals whereas the level difference between the two channels may effectively be zero.

In the following embodiments the spatial analysis of ambient noise is performed using a direction analysis where direction analysis emphasizes the directions of stationary background sounds that are easily replaced with noise and de-emphasizes directions from the close-by sound sources and non-stationary sounds that do not present near end ambient noise. This can be implemented in some embodiments by using the echo cancelled audio signals for direction estimation and using a voice activity detection (VAD) or other suitable methods to recognize close-by and/or non-stationary sounds and de-emphasizing direction analysis results when such sounds are active.

The embodiments therefore aim to improve the perceived directions of the local near-end ambient noise during echo suppression. The embodiments improve the directional match between ambient and comfort noise.

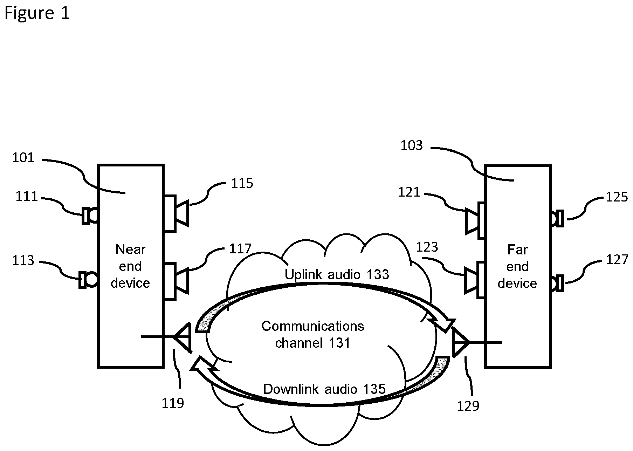

With respect to Figure 1 is shown an example arrangement of suitable devices or apparatus able to implement some of the embodiments discussed below. In the following description the terms devices, electronic devices and apparatus are interchangeable. In Figure 1 and the examples described herein a communication between two devices or apparatus (two-party or two-way communication) is described. However in some embodiments more than two devices or apparatus (multi-way or multi-party communication) can be implemented by considering the system to implement multiple far-end devices as described below.

In the following examples a 'directional' analysis is used to determine a direction of the ambient part of the at least two audio signals and based on this determined direction modify 'comfort' noise. However more generally a 'difference' analysis of the ambient part of the audio signals, to determine a phase, level or time difference can be employed and based on this difference analysis modify the comfort noise. Thus the aim is to enable the comfort noise to have a difference similar to the ambient part audio signals. In some embodiments this difference parameter can be a phase difference parameter representing a phase difference between the ambient part of the at least two audio signals or a level difference parameter representing a level difference between the ambient part of the at least two audio signals or a time difference parameter representing a time difference between the ambient part of the at least two audio signals.

In the example shown in Figure 1 there is shown a near end device 101 or apparatus and a far end device 103 or apparatus which are able to communicate over a suitable communications channel 131. In this and the following examples the communications channel 131 comprises an uplink audio connection 133 from the near end device 101 to the far end device 103 and a downlink audio connection 135 from the far end device 103 to the near end device 101.

The device or apparatus 101, 103 can be any suitable electronic device. In the examples shown in Figure 1 the near end device 101 and far end device 103 are similarly configured. However, it would be understood that in some embodiments the configuration of the devices, such as the near end device 101 and far end device 103 can differ.

Thus, the near end device 101 comprises two microphones 111, 113 (and which can typically be MEMS microphones but can be any suitable microphone technology), two loudspeakers 115, 117 (which can be implemented as an internal speaker element or a connected speaker, wired or wireless, for example using Bluetooth connections) and communication hardware as shown in Figure 1 by the antenna 119 that can be used for two-way audio communication. Although Figure 1 shows the near end device 101 comprising two microphones 111, 113 and two loudspeakers 115, 117, in some embodiments there can be at least two microphones and at least one loudspeaker. Similarly, the physical arrangement or location of the microphones and loudspeakers can be any suitable arrangement. The communications channel 131 can be implemented over any suitable communications network. For example, the communications channel can be implemented over a wireless communications network. The communications network similarly can employ any suitable known communications protocol. For example, in some embodiments the transceiver can use a suitable 3GPP or non-3GPP based communications protocol for example a universal mobile telecommunications system (UMTS) protocol, E-UTRAN, 5G or NR, or a wireless local area network (WLAN) protocol such as for example IEEE 802.X.

The far end device 103, as described above is configured similarly to the near device 101 and as shown in the example in Figure 1 comprises two microphones 125, 127, two loudspeakers 121, 123 and communication hardware as shown in Figure 1 by the antenna 129 that can be used for two-way audio communication.

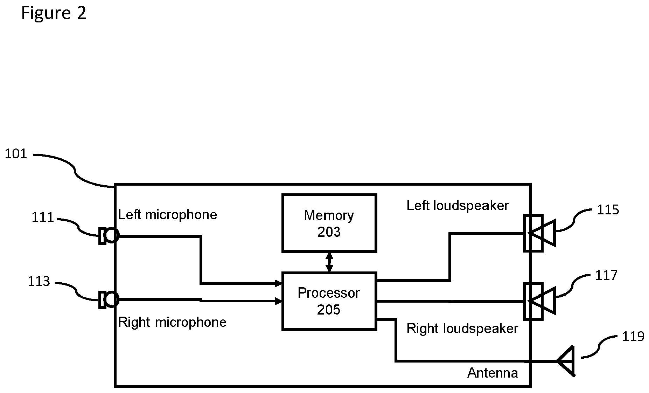

With respect to Figure 2 is shown in further detail an example near end device 101. As shown in Figure 2 the near end 101 comprises two microphones, specifically a left microphone 111 (which can be physically located on a relative left side of the device), and a right microphone 113 (which can be physically located on a relative right side of the device). Furthermore, there is shown that the near end device 101 comprises two loudspeakers, a left loudspeaker 115 (which can be physically located on a relative left side of the device), and a right loudspeaker 117 (which can be physically located on a relative right side of the device) and communication hardware as shown in Figure 2 by the antenna 119 that can be used for two-way audio communication.

Furthermore, as shown in Figure 2, the near end device 101 comprises a processor 205 or processing unit. Although one processor 205 is shown, in some embodiments there can be more than one processor or processing unit. The processor 205 can be configured to execute various program codes such as the methods such as described herein. As shown in the example in Figure 2 the processor 205 can obtain or receive audio signals from the microphones 111 and 113 and further output audio signals to the loudspeakers 115, 117. Although not shown the processor or ancillary circuitry associated with the processor can in some embodiments further comprise suitable analogue to digital or digital to analogue circuitry.

Furthermore, there is shown a connection between the antenna 119 and the processor 205. In some embodiments the processor 205 is configured to also handle the radio stack that controls data transmission and reception. It would be understood that any suitable interfacing circuitry between the antenna 119 and the processor 205 could be implemented but is not shown for clarity reasons.

In some embodiments the near end device 101 further comprises a memory 203. In some embodiments the processor 205 is coupled to the memory 203. The memory 203 can be any suitable storage means. In some embodiments the memory 203 comprises a program code section for storing program codes implementable upon the processor 205. Furthermore, in some embodiments the memory 203 can further comprise a stored data section for storing data, for example data that has been processed or to be processed in accordance with the embodiments as described herein. The implemented program code stored within the program code section and the data stored within the stored data section can be retrieved by the processor 205 whenever needed via the memory-processor coupling.

The processing may be implemented on a single processor or the processing can be divided between multiple processors that may be generic, DSP (Digital Signal Processing) or ML (Machine Learning) optimized. The processors may be fixed point or floating-point processors.

Examples of suitable near end device 101 (or far end device 103) are: mobile phones, laptops, desktops, tablet computers, smart watches, AR/VR/MR/XR glasses or Head Mounted Displays.

In the following examples the uplink audio is the created or generated spatial (stereo, binaural, multichannel, 5.1) output audio signal that is transmitted from the near end device 101 to the far end device 103 via the communications channel 131. The downlink audio 135 is the audio received from the far end device 103 via the communications channel 131.

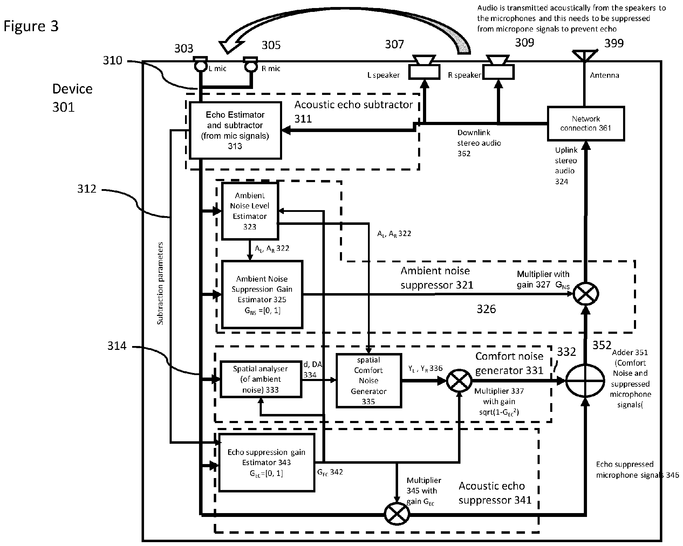

In the following examples as shown in Figures 3 to 6, the embodiments are described with respect to the audio chain parts which attempt to produce better quality audio in a manner as indicated above. It would be understood that in some embodiment other processing which is not discussed in detail herein can be implemented and are generally known. For example, other processing that can be implemented in some embodiments include: Automatic Gain Control, Equalization, A/D and D/A converters, low-bitrate encoders/decoders, processor management, memory management, display and other user interface controls, battery management, network management etc.

With respect to Figure 3 is shown an example device 301, which can for example be a near end device 101 or far end device 103. The example device as shown in Figure 3 comprises a left microphone or L mic 303, a right microphone or R mic 305. The left microphone 303 and right microphone 305 are configured to generate audio signals 310 and pass these to an acoustic echo subtractor 311.

Furthermore, the example device 301 is configured to obtain, via the antenna 399 and the network connection 361 (or transceiver) the downlink stereo audio signal 362. Although the downlink audio signal in this example is a stereo audio signal it would be appreciated that the audio signal is a mono, stereo or more than two channel audio signal and can be a format suitable for output by the number or configuration of the loudspeakers.

The example device 301 further comprises a left loudspeaker (or as shown in Figure 3, L speaker) 307 and right loudspeaker (or as shown in Figure 3, R speaker) 309. The left loudspeaker 307 and right loudspeaker 309 can be configured to receive the downlink stereo audio signal and produce audio outputs.

As shown in Figure 3 and described above the audio output generated by the loudspeakers can be transmitted from the loudspeakers to the microphones. It is this acoustic coupling between the loudspeakers and the microphones which the acoustic echo subtractor 311 and acoustic echo suppressor 341 attempt to remove or suppress.

The device 301 in some embodiments comprises an acoustic echo subtractor 311. The acoustic echo subtractor 311 is configured to obtain the downlink stereo audio signals 362 and the microphone audio signals 310 and generate an estimate of the echo and associated subtraction parameters and furthermore remove the estimated echo from the microphone audio signals 310 to output the subtraction parameter 312 and furthermore the echo subtracted microphone audio signals 314.

In some embodiments the acoustic echo subtractor 311 comprises an echo estimator and subtractor 313 configured to obtain the downlink stereo audio signals 362 and the microphone audio signals 310. The echo component within the microphone audio signals 310 is then estimated based on an analysis of the microphone audio signals 310 and the downlink stereo audio signals 362. Having estimated the echo component then the echo component can be subtracted from the microphone audio signals 310. For example, the acoustic path or coupling between the loudspeakers to microphones can be estimated and the downlink stereo audio signals filtered with the impulse response of the path and the result subtracted from the microphone audio signals.

This filtering may leave a residual echo onto the microphone signals. The residual echo can be further reduced using the acoustic echo suppressor as described later on.

In some embodiments the apparatus comprises an ambient noise suppressor 321. The ambient noise suppressor 321 is configured to receive the output from the acoustic echo subtractor 311 and added outputs from a comfort noise generator 331 and acoustic echo suppressor 341 and generate an uplink stereo audio signal 324. In some embodiments the uplink stereo audio signal 324 can be any suitable audio format and not only a stereo audio signal. The ambient noise suppressor 321 is configured to reduce ambient noise from the audio signals. Ambient noise can for this disclosure mean stationary background sounds. In other words, background hum. The background hum are the sounds that have a rather constant level and no clear direction such as background traffic hum.

In some embodiments the ambient noise suppressor 321 comprises an ambient noise level estimator 323. The ambient noise level estimator 323 is configured to receive an estimate of the echo suppression gain $G_{EC}$ 342 from the acoustic echo suppressor 341 and the echo subtracted microphone audio signals 314 and based on these estimate an ambient noise level $A_L$, $A_R$ 322. In some embodiments these ambient noise level estimates are generated based on any suitable method, such as methods used in noise and echo control solutions or voice activity detectors like USOO5963901 "method and device for voice activity detection and a communication device ".

Furthermore in some embodiments the ambient noise suppressor 321 comprises an ambient noise suppression gain estimator 325. The ambient noise suppression gain estimator 325 can be configured to obtain the echo subtracted microphone audio signals 314 and estimated ambient noise level $A_L$, $A_R$ 322 and based on these suppression gain estimate $G_{NS}$ is generated based on a suitable method, such as Wiener filter based gain estimation.

In some embodiments ambient noise suppression gain estimate $G_{NS} = [0, 1]$ 326 is configured to be output to a multiplier 327 which is configured to multiply the combined comfort noise and suppressed microphone audio signals with the gain estimate to generate the uplink stereo audio signal 324.

In some embodiments the apparatus comprises a comfort noise generator 331. The comfort noise generator 331 is configured to obtain or receive the echo subtracted microphone audio signals 314 and the ambient noise level estimates 322 from the ambient noise suppressor 321 and the echo suppression gain estimates 342 and based on these generate comfort noise 332 which can be provided to the adder 351 where the comfort noise 332 and the echo suppressed microphone audio signals 346 are combined to form the combined comfort noise and suppressed microphone audio signals 352.

In some embodiments the comfort noise generator 331 comprises a spatial analyser (of ambient noise) 333. The spatial analyser 333 is configured to obtain the echo subtracted microphone audio signals 314 and echo suppression gain $G_{EC}$ 342 from the acoustic echo suppressor 341 and generate delays d, and direct-to-ambient energy ratios DA 334.

The spatial analyser is configured to estimate a delay between microphone signals as the delay that results in maximum correlation between the signals. The amount of correlation provides an estimate for the DA ratio (Direct-to-Ambient ratio). In some embodiments other methods can also be employed. For example, a VAD (Voice Activity Detector) can be employed to determine the presence of speech and inversely moments when there is only background (ambient noise) present. Alternatively, other means can be used to detect local user and downlink audio activity. For example in case of other categories for sounds than speech. For example local near-end close-by sound sources can be detected by estimating sound source distance using known methods such as:

In-Jee Junga, Jeong-Guon: "Distance estimation of a sound source using the multiple intensity vectors", The Journal of the Acoustical Society of America 148, EL105 (2020), https://asa.scitation.org/doi/10.1121/10.0001639; or
Mariam Yiwere, Eun Joo Rhee: "Sound Source Distance Estimation Using Deep Learning: An Image Classification Approach", https://www.ncbi.nlm.nih.gov/pmc/articles/PMC6982911/

In some embodiments a downlink activity can be determined from $G_{EC}$ where small values ($G_{EC}$ values significantly different from 1) imply downlink activity. Delay d and D/A ratio values can be updated more (faster) using current estimates when there is mostly ambient noise present and less (slower) when there is speech or other close by near-end sound sources. Slower estimating means using more past information about d and DA for the current time-frequency tiles. In some embodiments a look up table can be used to convert local and downlink activity into a forgetting factor. The look-up table can be a direct conversion (no change) from VAD value to the forgetting factor a. However, depending on the microphones, their integration, the device shape etc. the look-up table may need to be modified to be device specific.

Thus, in some embodiment the determination of the presence of downlink and local user speech or other audio signals can be used to control the update speed of spatial parameters d and DA to improve the quality of the comfort noise.

In some embodiments the comfort noise generator 331 comprises a spatial comfort noise generator 335 which is configured to receive the spatial parameters d and DA 334 and the ambient noise level estimate $A_L$, $A_R$ 322 and generate spatial comfort noise $Y_L$, $Y_R$ 336. The spatial noise $Y_L$, $Y_R$ 336 can be white noise. Each generated noise signal is uncorrelated (independent) to the others. In some embodiments this can be generated using a known noise generator. In some embodiments uncorrelatedness is typically implemented by giving a different seed value to the noise generator function. In some embodiments delaying the signal can be implemented by shifting it in time domain or altering the phase of the signal in frequency domain.

Furthermore, in some embodiments the noise signals are gained to match the level of the ambient noise and mixed to get their D/A ratio to be similar to that of the ambient noise.

Thus, in some embodiments the comfort noise is made to sound as if it is coming from a direction that matches the direction in the ambient noise d by using the delay.

In some embodiments the comfort noise generator 331 comprises a multiplier 337 which is configured to obtain the comfort noise $Y_L$, $Y_R$ 336 and echo suppression gain estimates 342 $G_{EC}$ and then multiply the comfort noise $Y_L$, $Y_R$ 336 by the sqrt($1-G_{EC}^2$) such that the comfort noise matches the echo cancelled audio signal energy. The output of the multiplier 337 is the output comfort noise 332.

In some embodiments the apparatus comprises an acoustic echo suppressor 341. The acoustic echo suppressor 341 is configured to obtain or receive the echo subtracted microphone audio signals 314, the subtraction parameters 312 and based on these generate echo suppressed microphone audio signals 346 which can be provided to the adder 351 where the comfort noise 322 and the echo suppressed microphone audio signals 346 are combined to form the combined comfort noise and suppressed microphone audio signals 352. Additionally, the acoustic echo suppressor 341 is configured to generate and output an echo suppression gain 342 which can be passed to the comfort noise generator 331 and the ambient noise generator 321.

In some embodiments the acoustic echo suppressor 341 comprises an echo suppression gain estimator 343 which is configured to obtain the echo subtracted microphone audio signals 314, the subtraction parameters 312 and generate echo suppression gain estimates $G_{EC}$ 342. The echo suppression gain is estimated based on any suitable methods. For example, a method such as described in US 7,054,437, where the post filter corresponds to the residual echo suppressor implementation described herein.

In some embodiments the acoustic echo suppressor 341 further comprises a multiplier which is configured to receive the echo subtracted microphone audio signals 314 and echo suppression gain estimates $G_{EC}$ 342 and multiply the echo subtracted microphone audio signals 314 by the echo suppression gain estimates $G_{EC}$ 342 to generate the echo suppressed microphone signal 346.

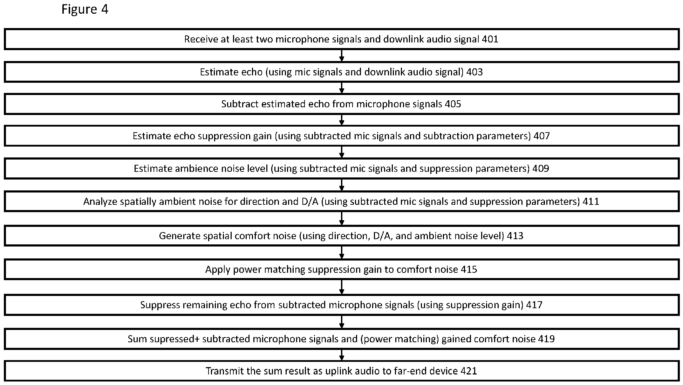

With respect to Figure 4 is shown a flow diagram of the operations of the device as shown in Figure 3 according to some embodiments.

Thus, for example in some embodiment the method comprises receiving at least two microphone signals and downlink audio signal as shown in Figure 4 by 401.

Then estimate echo (using mic signals and downlink audio signal) as shown in Figure 4 by 403.

After this subtract estimated echo from microphone signals as shown in Figure 4 by 405.

Following this estimate echo suppression gain (using subtracted mic signals and subtraction parameters) as shown in Figure 4 by 407.

Then estimate ambience noise level (using subtracted mic signals and suppression parameters) as shown in Figure 4 by 409.

Afterwards analyze spatially ambient noise for direction and D/A (using subtracted mic signals and suppression parameters) as shown in Figure 4 by 411.

Following this generate spatial comfort noise (using direction, D/A, and ambient noise level) as shown in Figure 4 by 413.

Then apply power matching suppression gain to comfort noise as shown in Figure 4 by 415.

Afterwards suppress remaining echo from subtracted microphone signals (using suppression gain) as shown in Figure 4 by 417.

Then Sum supressed + subtracted microphone signals and gained comfort noise as shown in Figure 4 by 419.

Finally transmit the sum result as uplink audio to far-end device as shown in Figure 4 by 421.

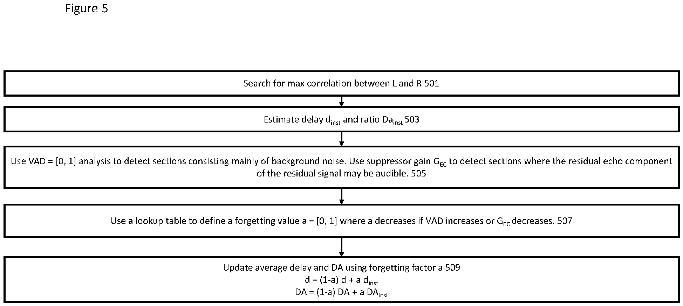

With respect to Figure 5 is shown a flow diagram of the operations of the example ambient noise generator as shown in Figure 3.

Thus, a first operation is searching for max correlation between L and R microphone signals as shown in Figure 5 by 501.

Then estimate delays dinst and ratios DAinst as shown in Figure 5 by 503.

Then use VAD = [0, 1] analysis to detect sections consisting mainly of background noise and use suppressor gain $G_{EC}$ to detect sections where the residual echo component of the residual signal may be audible as shown in Figure 5 by 505

Having performed that use a lookup table to define a forgetting value a = [0, 1] where a decreases if VAD increases or $G_{EC}$ decreases as shown in Figure 5 by 507.

Then update average delay and DA using forgetting factor as shown in Figure 5 by 509

$$d = (1-a)\, d + a\, d_{inst}$$

$$DA = (1-a)\, DA + a\, DA_{inst}$$

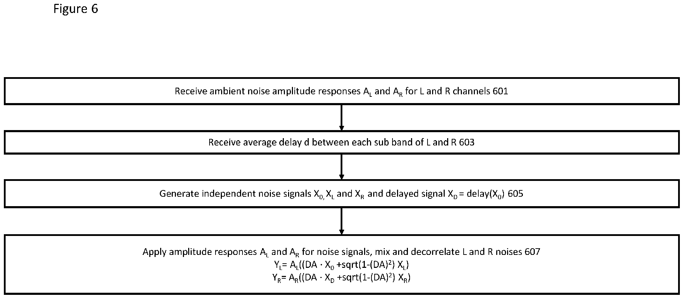

With respect to Figure 6 is shown a flow diagram of the operations of the spatial comfort noise generator as shown in Figure 3.

Thus, for example a first operation is receiving ambient noise amplitude responses $A_L$ and $A_R$ for L and R channels as shown in Figure 6 by 601.

Then receive average delay d between each sub band of L and R as shown in Figure 6 by 603.

The next operation is then to generate independent noise signals $X_0$, $X_L$ and $X_R$ and delayed signal $X_D = delay(X_0)$ as shown in Figure 6 by 605.

Then apply amplitude responses $A_L$ and $A_R$ for noise signals, mix and decorrelate L and R noises as shown in Figure 6 by 607.

$$Y_L = A_L((DA \cdot X_0 + sqrt(1-(DA)^2)\, X_L)$$

$$Y_R = A_R((DA \cdot X_D + sqrt(1-(DA)^2)\, X_R)$$

In some embodiments the device is therefore configured to take in at least two microphone signals for creating uplink audio signal and play back downlink audio signals using at least one loudspeaker.

In such embodiments the acoustic echo is subtracted and suppressed. The artefacts from this are reduced by filling the suppression gaps with comfort noise.

The comfort noise should, as much as possible, be configured to mimic the spatial characteristics of the ambient noise. In this way the comfort noise is perceived to originate from the same direction with the same diffuseness as the ambient noise and therefore these comfort noise patches are not noticeable.

In some embodiments the processing is implemented based on small time frequency tiles (often called subbands) by framing the microphone signals in typically 20ms frames, transforming the frames into frequency domain (using FFT, MDCT, DCT or using filter banks), splitting the frequency domain signal into frequency bands and processing the bands differently. These type of framed bands of audio are referred to as time-frequency tiles. Other methods such as filterbanks exist for creating similar tiles. Once processing is done, the frequency domain signals are transformed into time domain.

Suppression can be implemented using any suitable means, normal suppression where typically the signal is attenuated (possible differently in different frequency bands) or using sound source separation methods where the downlink audio is separated from the microphone signals or using machine learning methods to remove the downlink audio. All these methods cause artefacts and the artefacts can be masked using comfort noise. The comfort noise generated in the embodiments described herein has a spatial characteristic such as delay and/or D/A ratio between channels while not necessarily having any significant level difference between two channels.

In some cases, the device may not use a network connection but instead play back content e.g. music from internal memory using the speakers and records audio (and optionally video) at the same time. The played music can then be suppressed from the audio (and video) recording.

In some cases device external microphones and/or loudspeakers may be used.

The number of output audio signals may be more than two, the output can be stereo, 5.1, or 7.2 meant for loudspeakers, stereo or binaural meant for headphones etc. In such embodiments with more than two channels in the output/uplink an extra processing step is employed that converts microphone signals into such signals using known methods.

In some embodiments the number of microphone signals may be two or more. In the embodiments where there are more than two microphone signals pairs of audio signals would be made of the existing signals and processing implemented in pairs. For example, if there are three microphones, a selection could be two pairs 1,2 and 1,3 and the comfort noise for microphone 1 would be determined when processing pair 1, 2 or pair 1,3.

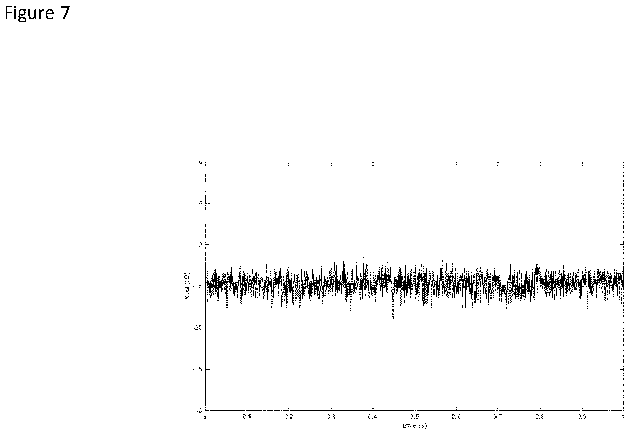

With respect to Figure 7 is shown two example channels of noise. In the example simulated system there is noise arriving from the left side of the capturing device. This represents a typical situation in which the ambience signal has a sector where it is originating from. In Figure 7 there are left and right microphone signals presented but they overlap almost perfectly since there is only delay difference between channels. At instant 0.54 seconds the original signal in Figure 7 is replaced with two alternative comfort noise signals. In both signals the levels are set similar to the original signal. In the first case, which represent an example known method, the comfort noise is added to both channels without considering spatiality, i.e. there is no delay between added noise signals and signals are thus identical. In the second case, which represents the situation described in the embodiments, spatiality is considered, and a delay is added between comfort noise signals. The delay corresponds to the delay between channels before instant 0.54 seconds. Since the Figure 7 shows the levels of the signals these two options look identical.

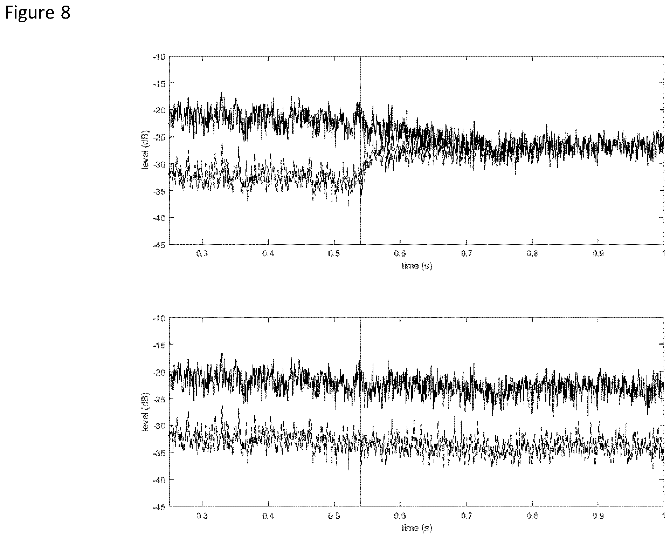

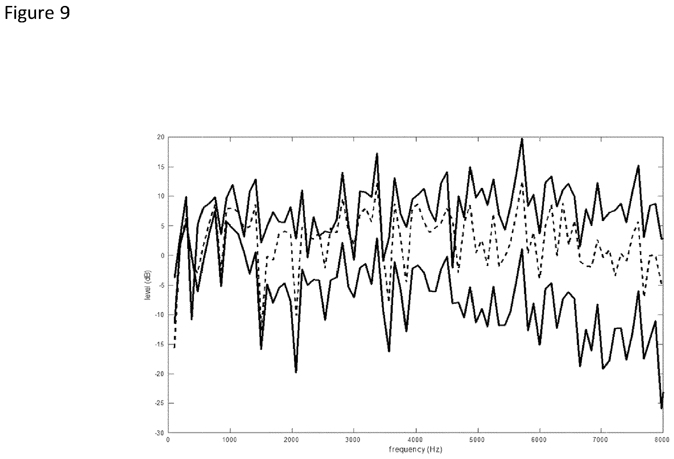

In this example there are shown synthesized signals in binaural format. Synthesized signals are shown in Figure 8. The synthesis is performed based on spatial cues in the signal and thus before 0.54 seconds the level of the left channel is higher than the level or the right channel. Since the spatial cues are maintained in signals, the proposed method (as demonstrated by the lower part of Figure 8) is able to maintain the similar level difference also after the signals are replaced with spatial noise (i.e., after 0.54 seconds), Since both the spatial cues and signal levels match the original signal also the output remains very similar before and after 0.54 seconds. The example known method (the upper part of Figure 8) fails to maintain level differences due to the lack of right kind of spatial information and the output signal effectively becomes a mono channel audio signal. The same situation is presented in the frequency domain in Figure 9, which presents the spectrum of the two methods after 0.54 seconds. The dotted line represents the example known method which results in mono output. The solid line curves represent the left (upper) and right (lower) channel outputs of the invented method.

In general, the various embodiments of the invention may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments of this invention may be implemented by computer software executable by a data processor of the mobile device, such as in the processor entity, or by hardware, or by a combination of software and hardware. Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general-purpose computers, special purpose computers, microprocessors, digital signal processors (DSPs), application specific integrated circuits (ASIC), gate level circuits and processors based on multi-core processor architecture, as non-limiting examples.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre-stored design modules. Once the design for a semiconductor circuit has been completed, the resultant design, in a standardized electronic format (e.g., Opus, GDSII, or the like) may be transmitted to a semiconductor fabrication facility or "fab" for fabrication.

As used in this application, the term "circuitry" may refer to one or more or all of the following:

> (a) hardware-only circuit implementations (such as implementations in only analog and/or digital circuitry) and
> (b) combinations of hardware circuits and software, such as (as applicable):
>
> > (i) a combination of analog and/or digital hardware circuit(s) with software/firmware and
> > (ii) any portions of hardware processor(s) with software (including digital signal processor(s)), software, and memory(ies) that work together to cause an apparatus, such as a mobile phone or server, to perform various functions) and hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The term "non-transitory," as used herein, is a limitation of the medium itself (i.e., tangible, not a signal ) as opposed to a limitation on data storage persistency (e.g., RAM vs. ROM).

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention as defined in the appended claims.

## Claims

1. A method for generating at least two channel audio signals for two or multi-way communication, the method comprising:

   capturing, from at least two microphones, at least two audio signals;
   generating at least two audio signals based on the captured at least two audio signals;
   analysing an ambient part of the at least two audio signals to determine a difference parameter; and
   generating a spatial comfort noise based on the difference parameter.

2. The method as claimed in claim 1, wherein generating at least two audio signals based on the captured at least two audio signals further comprises:

   obtaining at least two downlink audio signals;
   determining at least two estimated echo audio signals from the at least two downlink audio signals; and
   subtracting the at least two estimated echo audio signals from the captured at least two audio signals to generate the at least two audio signals.

3. The method as claimed in any of claims 1 or 2, further comprising estimating an ambient part noise level, wherein generating a spatial comfort noise based on the difference parameter further comprises generating a spatial comfort noise further based on the ambient part noise level.

4. The method as claimed in any of claims 1 to 3, wherein the difference parameter is a directional parameter representing a direction of the ambient part of the at least two audio signals, and analysing the ambient part comprises spatially analysing the ambient part further comprises:

> determining a delay and/or phase and/or level difference between at least a first pair of the at least two audio signals; and
> determining the directional parameter based on the delay and/or phase and/or level difference and a determined distance and/or orientation between microphones associated with the first pair of the at least two audio signals.

5. The method as claimed in any of claims 1 to 3, wherein analysing the ambient part comprises spatially analysing the ambient part further comprises:

> determining a diffuseness of the at least two audio signals; and
> determining the difference parameter based on the determined diffuseness.

6. The method as claimed in any of claims 1 to 3, wherein analysing the ambient part comprises spatially analysing the ambient part further comprises:

> determining for at least one time and/or frequency element that the at least two audio signals comprise an active non-stationary audio source; and
> spatially analysing the ambient part of the at least two audio signals for elements other than the determined at least one time and/or frequency element in order to determine an ambient directional parameter as a directional parameter.

7. The method as claimed in any of claims 1 to 6, wherein the difference parameter is one of:

> a directional parameter representing a direction of the ambient part of the at least two audio signals;
> a phase difference parameter representing a phase difference between the ambient part of the at least two audio signals;
> a level difference parameter representing a level difference between the ambient part of the at least two audio signals; and
> a delay or time difference parameter representing a delay or time difference between the ambient part of the at least two audio signals.

8. An apparatus for generating at least two channel audio signals for two or multi-way communication, the apparatus comprising means configured to:

> capture, from at least two microphones, at least two audio signals;
> generate at least two audio signals based on the captured at least two audio signals;
analyse an ambient part of the at least two audio signals to determine a difference parameter; and
generate a spatial comfort noise based on the difference parameter.

9. The apparatus as claimed in claim 8, wherein the means configured to generate at least two audio signals based on the captured at least two audio signals is further configured to:

> obtain at least two downlink audio signals;
> determine at least two estimated echo audio signals from the at least two downlink audio signals; and
> subtract the at least two estimated echo audio signals from the captured at least two audio signals to generate the at least two audio signals.

10. The apparatus as claimed in any of claims 8 or 9, wherein the means is further configured to estimate an ambient part noise level, wherein the means configured to generate a spatial comfort noise based on the difference parameter is further configured to generate a spatial comfort noise further based on the ambient part noise level.

11. The apparatus as claimed in any of claims 8 to 10, wherein the difference parameter is a directional parameter representing a direction of the ambient part of the at least two audio signals, and the means configured to analyse the ambient part is configured to spatially analyse the ambient part to:

> determine a delay and/or phase and/or level difference between at least a first pair of the at least two audio signals; and
> determine the directional parameter based on the delay and/or phase and/or level difference and a determined distance and/or orientation between microphones associated with the first pair of the at least two audio signals.

12. The apparatus as claimed in any of claims 8 to 10, wherein the means configured to analyse the ambient part is configured to spatially analyse the ambient part to:

> determine a diffuseness of the at least two audio signals; and
> determine the difference parameter based on the determined diffuseness.

13. The apparatus as claimed in any of claims 8 to 10, wherein the means configured to analyse the ambient part is configured to spatially analyse the ambient part to:

determine for at least one time and/or frequency element that the at least two audio signals comprise an active non-stationary audio source; and spatially analyse the ambient part of the at least two audio signals for elements other than the determined at least one time and/or frequency element in order to determine an ambient directional parameter as a directional parameter.

14. The apparatus as claimed in any of claims 8 to 13, wherein the difference parameter is one of:

a directional parameter representing a direction of the ambient part of the at least two audio signals;
a phase difference parameter representing a phase difference between the ambient part of the at least two audio signals;
a level difference parameter representing a level difference between the ambient part of the at least two audio signals; and
a delay or time difference parameter representing a delay or time difference between the ambient part of the at least two audio signals.

15. The apparatus as claimed in any of claims 8 to 14, wherein the apparatus comprises at least two microphones, at least one loudspeaker and an antenna.

Figure 1

Figure 2

101

111 — Left microphone

Memory
203

Left loudspeaker — 115

113 — Right microphone

Processor
205

117

Right loudspeaker

Antenna — 119

**Figure 3**

Figure 4

| Receive at least two microphone signals and downlink audio signal 401 |
| :---: |
| ↓ |
| Estimate echo (using mic signals and downlink audio signal) 403 |
| ↓ |
| Subtract estimated echo from microphone signals 405 |
| ↓ |
| Estimate echo suppression gain (using subtracted mic signals and subtraction parameters) 407 |
| ↓ |
| Estimate ambience noise level (using subtracted mic signals and suppression parameters) 409 |
| ↓ |
| Analyze spatially ambient noise for direction and D/A (using subtracted mic signals and suppression parameters) 411 |
| ↓ |
| Generate spatial comfort noise (using direction, D/A, and ambient noise level) 413 |
| ↓ |
| Apply power matching suppression gain to comfort noise 415 |
| ↓ |
| Suppress remaining echo from subtracted microphone signals (using suppression gain) 417 |
| ↓ |
| Sum supressed+ subtracted microphone signals and (power matching) gained comfort noise 419 |
| ↓ |
| Transmit the sum result as uplink audio to far-end device 421 |

Figure 5

| Search for max correlation between L and R 501 |
| --- |

| Estimate delay $d_{inst}$ and ratio $Da_{inst}$ 503 |
| --- |

| Use VAD = [0, 1] analysis to detect sections consisting mainly of background noise. Use suppressor gain $G_{EC}$ to detect sections where the residual echo component of the residual signal may be audible. 505 |
| --- |

| Use a lookup table to define a forgetting value a = [0, 1] where a decreases if VAD increases or $G_{EC}$ decreases. 507 |
| --- |

| Update average delay and DA using forgetting factor a 509<br>d = (1-a) d + a $d_{inst}$<br>DA = (1-a) DA + a $DA_{inst}$ |
| --- |

Figure 6

Receive ambient noise amplitude responses $A_L$ and $A_R$ for L and R channels 601

Receive average delay d between each sub band of L and R 603

Generate independent noise signals $X_0, X_L$ and $X_R$ and delayed signal $X_D = \text{delay}(X_0)$ 605

Apply amplitude responses $A_L$ and $A_R$ for noise signals, mix and decorrelate L and R noises 607
$$Y_L = A_L((DA \cdot X_D + \text{sqrt}(1-(DA)^2) X_L)$$
$$Y_R = A_R((DA \cdot X_D + \text{sqrt}(1-(DA)^2) X_R)$$

Figure 7

Figure 8

Figure 9

Europäisches
Patentamt
European
Patent Office
Office européen
des brevets

# EUROPEAN SEARCH REPORT

Application Number

EP 23 22 0679

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 596 138 A (NOKIA TECHNOLOGIES OY [FI]) 22 December 2021 (2021-12-22) * page 12, line 14 - page 17, line 22; figures 4,5 * * page 24, line 8 - page 30, line 5 * | 1,3-8, 10-15 | INV. H04M9/08 G10L19/012 ADD. G10L19/008 |
| X | US 9 865 274 B1 (VICINUS PATRICK [DE] ET AL) 9 January 2018 (2018-01-09) * column 4, line 32 - line 42 * * column 11, line 10 - column 12, line 21 * | 1-4, 7-11,14, 15 | |
| X | WO 2015/122809 A1 (ERICSSON TELEFON AB L M [SE]) 20 August 2015 (2015-08-20) * paragraphs [0002], [0005], [0036] * | 1-3, 8-10,15 | |
| A | DOLBY LABORATORIES ET AL: "DTX design constraints", 3GPP DRAFT; S4-200159, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG4, no. Wroclaw, Poland; 20200120 - 20200124 14 January 2020 (2020-01-14), XP052472989, Retrieved from the Internet: URL:https://ftp.3gpp.org/tsg_sa/WG4_CODEC/TSGS4_107_Wroclaw/Docs/S4-200159.zip S4-200159_DTX design constraints.docx [retrieved on 2020-01-14] * the whole document * | 1-15 | TECHNICAL FIELDS SEARCHED (IPC) H04M G10L |

The present search report has been drawn up for all claims

| Place of search | Date of completion of the search | Examiner |
|---|---|---|
| The Hague | 9 May 2024 | Sorrentino, Andrea |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                                        

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 22 0679

This annex lists the patent family members relating to the patent documents cited in the above-mentioned European search report.
The members are as contained in the European Patent Office EDP file on
The European Patent Office is in no way liable for these particulars which are merely given for the purpose of information.

09-05-2024

| Patent document cited in search report | | Publication date | Patent family member(s) | | Publication date |
|---|---|---|---|---|---|
| GB 2596138 | A | 22-12-2021 | EP | 4169018 A1 | 26-04-2023 |
| | | | GB | 2596138 A | 22-12-2021 |
| | | | WO | 2021255328 A1 | 23-12-2021 |
| US 9865274 | B1 | 09-01-2018 | NONE | | |
| WO 2015122809 | A1 | 20-08-2015 | BR | 112016018510 A2 | 08-08-2017 |
| | | | EP | 3105755 A1 | 21-12-2016 |
| | | | EP | 3244404 A1 | 15-11-2017 |
| | | | ES | 2687617 T3 | 26-10-2018 |
| | | | MX | 353120 B | 20-12-2017 |
| | | | MX | 367544 B | 27-08-2019 |
| | | | US | 2017047072 A1 | 16-02-2017 |
| | | | US | 2021166703 A1 | 03-06-2021 |
| | | | US | 2022351738 A1 | 03-11-2022 |
| | | | WO | 2015122809 A1 | 20-08-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7054437 B

**Non-patent literature cited in the description**

- **IN-JEE JUNGA ; JEONG-GUON.** Distance estimation of a sound source using the multiple intensity vectors. *The Journal of the Acoustical Society of America,* 2020, vol. 148, EL105, https://asa.scitation.org/doi/10.1121/10.0001639